(19) Europäisches Patentamt
European Patent Office
Office européen des brevets

(11) **EP 4 475 043 A1**

(12) **EUROPEAN PATENT APPLICATION**

(43) Date of publication:
**11.12.2024 Bulletin 2024/50**

(21) Application number: **23305888.2**

(22) Date of filing: **05.06.2023**

(51) International Patent Classification (IPC):
***G06N 20/00*** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SCHNEIDER ELECTRIC INDUSTRIES SAS**
**92500 Rueil-Malmaison (FR)**

(72) Inventors:
• **BOGUSLAWSKI, Bartosz**
 **38100 GRENOBLE (FR)**
• **ABDALI, Aymane**
 **38000 GRENOBLE (FR)**
• **GRIPON, Vincent**
 **29280 PLOUZANE (FR)**
• **DRUMETZ, Lucas**
 **29200 BREST (FR)**

(74) Representative: **Plasseraud IP**
**104 Rue de Richelieu**
**CS92104**
**75080 Paris Cedex 02 (FR)**

(54) **A METHOD FOR SELECTING SAMPLES IN A DATASET TO BE LABELLED IN A CLASSIFICATION TASK, WHEREIN THE DATASET COMPRISES N SAMPLES BELONGING TO K CLASSES AND A METHOD FOR CLASSIFYING A DATASET**

(57)     A method for selecting samples in a dataset to be labelled in a classification task, wherein the dataset comprises N samples belonging to K classes, comprising the step of:
S10: extracting features of the N samples using a feature extractor;
S20: statistically inferring a probability distribution of the extracted features in the K classes, to obtain the density of each sample with respect to the K classes distributions; and
S30: selecting samples to be labelled using the density.

Figure 1

**Description**

FIELD OF INVENTION

The present invention relates to the field of machine learning, especially to Few-Shot leaning and classification.

BACKGROUND

Few-Shot learning problem is one that has been attracting more and more attention over the last couple of years. Few-shot learning is a machine learning technique used for small sample size problems. In contrast to traditional machine learning, which requires a large amount of data to train models, in few-shot learning, models are trained using only a few examples. In this case, the goal of Few-Shot learning is to train a model with only a few samples and use it to classify new, unseen examples.

Different branches of Few-shot learning are being explored and major ones include meta-learning, which aims to acquire task-level meta knowledge that the model utilizes to quickly adapt to new tasks with very few labeled examples. Another major branch is metric-learning, where the model leverages distance metrics to estimate the similarity between two inputs. Learning this allows generalization to novel categories with few labeled instances. These methods require for a model to be pre-trained on more general tasks, and the advances in this field made available a myriad of efficiently trained feature extractors with data augmentation techniques, ensembling and various other techniques. Classification in the inductive setting has mostly relied on simple methods whereas more diverse methods were used in the transductive setting allowing for more promising results.

Few-shot classification is a specific type of few-shot learning where the goal is to classify a set of novel examples based on a small number of labeled examples. In particular, few-shot classification relates to a problem of learning to classify a small set of data samples with no given training set but a very limited labeling budget instead. Such a problem is likely to arise in contexts where data samples are available yet their labeling is costly. These contexts are often encountered in real-world industrial applications. In this case, the key challenge in few-shot classification is to make effective use of the limited labeled data to improve the classification accuracy.

When the total number of data samples is large, Self-Supervised Learning (SSL) has recently emerged as a promising solution, showing the ability to reach high accuracy with a very limited number of labeled samples, yet requiring a large number of total samples.

When the number of data samples is reduced, in the art, a specific type of few-shot learning that uses transductive inference is proposed, namely Transductive few-shot classification (TFSC), which recognizes new classes with just a few examples and comprises many solutions that can similarly achieve high accuracy. In TFSC, a model is trained on a small set of labeled data and then applied to a larger set of unlabeled data to make predictions. The rationale consists in using a large generic dataset to train efficient feature extractors, hoping they can generate meaningful such features with respect to the considered Few-Shot task. The goal of TFSC is to improve the accuracy of few-shot learning by leveraging the correlation between labeled and unlabeled data. In addition, TFSC has applications in many domains, including computer vision, natural language processing, and robotics, where it is often used for tasks such as object recognition, text classification, and manipulation of objects.

It should be noted that in the context of TFSC benchmarks, the labeled samples of the Few-Shot task are usually considered to be uniformly drawn at random. The problem of selecting which samples to label in a classification task is not new. Indeed, the field of Active Learning has proposed many solutions to cope with this issue. However, in the art, the solutions proposed in Active Learning remains unsuited for Few-Shot scenarios as most used techniques that have strong theoretical bases are often heavily reliant on the utilized models. These techniques usually seek out to decrease the learner's variance, or base the selection on the uncertainty of the model. These techniques become challenging in a Cold-start setting where we start from zero labeled examples. Having too few samples and/or labeling budget makes this even more challenging as one cannot afford to undergo an initial phase of irrelevant labelings based on an unstable model.

The present invention aims to improve these drawbacks.

SUMMARY

In this regard, according to one aspect of the invention, it is provided a method for selecting samples in a dataset to be labelled in a classification task, wherein the dataset, for example, an image dataset, comprises N samples belonging to K classes, comprising the step of:

S10: extracting features of the N samples using a feature extractor;

S20: statistically inferring a probability distribution of the extracted features in the K classes, to obtain the density of each sample with respect to the K classes distributions; and

S30: actively selecting samples to be labelled using the density.

The method proposed above provides an approach to select samples to be labelled in a self-supervised manner. It can reach very high accuracy compared to classical TFSC methods.

In an embodiment, the method according to the first aspect further comprises a step of preprocessing the extracted features of N samples before the step of statistically inferring the probability distribution, for example, by means of a two-step normalization or a graph smoothing, so as to improve the accuracy and efficiency of the machine learning model by ensuring that the input data is appropriate for the algorithm being used.

In another embodiment, the step of selecting samples to be labelled using the density comprises:

S31: computing log-probability ratio (lpr) for each sample, wherein the logprobality ratio is a ratio of log-densities over the different label-features distributions;

S32: selecting one sample in each class having the lowest log-probability ratio as the samples to be labelled in a classification task;

S33: refining statistical inference using the selected samples having the lowest log-probability ratio and the samples having the highest log-probability ratio; and

S34: repeating steps S31 to S33 until a sufficient number of samples to be labelled are selected.

With such a two-tier methodology that consists in inferring the distribution of samples among the classes, and selecting the samples that are the most probable in each class to be labelled first, then the least probable ones, it reaches better accuracy in all proposed benchmarks.

According to another aspect of the invention, it is provided a method for classifying a dataset, for example, an image dataset, comprising N samples belonging to K classes, comprising the step of:

S10: extracting features of the N samples using a feature extractor;

S20: statistically inferring a probability distribution of the extracted features in the K classes, to obtain the density of each sample with respect to the K classes distributions; and

S30: assigning classes to the samples using densities, wherein the highest density may determine the class of the sample.

With such a method, it is possible to classify a dataset with limited labelling budget in a cold start setting in a much more efficient and accurate manner.

Similarly, in an embodiment, the method according to the second aspect further comprises a step of preprocessing the extracted features of N samples before the step of statistically inferring the probability distribution, for example, by means of a two-step normalization or a graph smoothing, so as to improve the accuracy and efficiency of the machine learning model by ensuring that the input data is appropriate for the algorithm being used.

In another embodiment, the step of selecting samples to be labelled using the density comprises:

S31: computing log-probability ratio (lpr) for each sample, wherein the logprobality ratio is a ratio of log-densities over the different label-features distributions;

S32: selecting one sample in each class having the lowest log-probability ratio as the samples to be labelled in a classification task;

S33: refining statistical inference using the selected samples having the lowest log-probability ratio and the samples having the highest log-probability ratio; and

S34: repeating steps S31 to S33 until a sufficient number of samples to be labelled are selected.

In another embodiment, the step of assigning classes to the samples using densities comprises:

- selecting samples to be labelled using the density;

- labelling the selected samples; and

- classifying the labelled samples.

According to yet another aspect of the invention, it is provided a computer program product comprising instructions to be executed by a processor, the instructions being adapted to performance of any one of methods as mentioned above.

In this regard, the present invention intends to classify a small, initially unlabeled, dataset given a very restrained labeling budget, and leads to a new approach in data-scarce learning settings.

BRIEF DESCRIPTION OF THE DRAWINGS

Other features and advantages of the present invention will appear in the description hereinafter, in reference to the appended drawing, where:

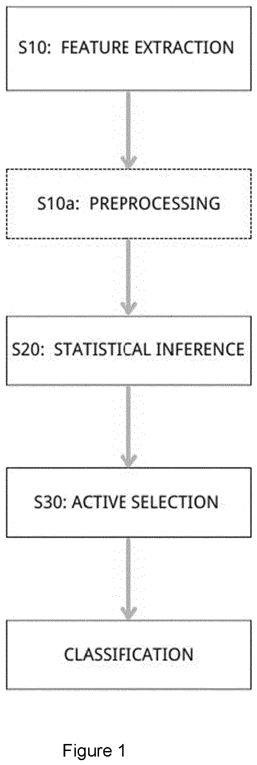

Figure 1 illustrates a flow chart of an exemplary classification method according to the present invention.

DESCRIPTION OF EMBODIMENTS

Figure 1 shows an exemplary classification method according to the present invention. The method is based on a classical setting in Few-Shot classification, wherein it is supposed that it is given a base dataset comprising possibly many classes and labeled samples in each class. This dataset can be used to train a generic feature extractor $f\theta$. Next, it is given a small dataset $\mathcal{N} := \{\mathbf{x}_i, y_i\}_{i=1}^{N}$ made of N samples that belong to K novel classes. These classes are disjoint from those of the base dataset, and the samples can be arbitrarily distributed among classes. The method according to the presen invention can predict the class of each sample in N after unveiling the label of at most $\ell \leq N$ samples. Performance is measured with weighted accuracy on all samples, including labeled ones.

For commodity, in the present invention, this problem to be solved is referred as a K-way, $\ell$-labels, N-samples task. The samples in the present invention are equivalent to the query set in standard TFSC setting whereas labels are equivalent to the total number of shots. The major difference lies in the fact labeled samples in the present invention are chosen instead of being randomly drawn, with the possible consequence of having a varying number of labels for each class, including possibly zero for some of them in the worst case.

The proposed method according to the present invention relies on multiple steps. The first one may comprises training a feature extractor to transform raw images into high dimensional feature vectors that are hopefully easier to discriminate. As an example, several preprocessing steps can be performed on the obtained feature vectors, including normalization and graph smoothing. Next, it is proposed to infer a probability distribution on all samples using an Expectation Maximization (EM) methodology. Finally, it is proposed a sequential active learning procedure that first picks the samples with the highest confidence for each class, then those with the lowest confidence. In the next paragraphs, a comprehensive explanation for each of these steps is provided..

**FEATURE EXTRACTION S10**

In this step, a feature extractor is created to provide meaningful representations for samples outside the class domain it was initially trained which is an important problem in machine learning. It is in particular a very common step in the field of Few-Shot learning, where elaborate methods can significantly boost the quality of features. For example, the classical ResNet12 architecture originally proposed in "Wei-Yu Chen, Yen-Cheng Liu, Zsolt Kira, Yu-Chiang Frank Wang, and Jia-Bin Huang. A closer look at few-shot classification. arXiv preprint arXiv: 1904.04232, 2019" was able to reach 57% average accuracy on 5-way 1-shotproblems generated from the mini-ImageNet dataset, while the same architecture can reach more than 70% accuracy with a few adaptations as stated in "Yassir Bendou, Yuqing Hu, Raphael Lafargue, Giulia Lioi, Bastion Pasdeloup, Stéphane Pateux, and Vincent Gripon. Easy: Ensemble augmented-shot y-shaped learning: State-of-the-art few-shot classification with simple ingredients, 2022".

Since training an efficient feature extractor is already a classical step in the literature of Few-Shot learning in the art, it is possible to simply use off-the-shelf models in the present invention.

**PREPROCESSING S10a**

Next, optionally, it is possible to perform a two-step normalization, where feature vectors obtained in the previous step are first centered (the mean of the resulting feature vectors is 0), and then projected onto the unit-sphere (the norm of each feature vector becomes 1). It is denoted a resulting feature vector x and the feature vectors matrix X.

Also, Graph Smoothing can be used to exploit the information contained in the unlabeled samples. It is proposed to adapt the methodology described in "Felix Wu, Amauri Souza, Tianyi Zhang, Christopher Fifty, Tao Yu, and Kilian Weinberger. Simplifying graph convolutional networks. In International conference on machine learning, pages 6861-6871. PMLR, 2019". First, it is created a graph whose vertices are the samples and whose edges depend on the cosine similarity between the associated feature vectors. Namely, it is possible to retain for each vertex its m most similar neighbors obtaining a binary graph whose adjacency matrix is denoted by A. Then we compute $M = (\beta I + A)^\kappa$, where $\beta$ and $\kappa$ are hyperparameters. The feature vectors X are transformed into $Z = MX$. Note that this operation has the effect of mixing each coordinate of a feature vector with the same coordinate in similar vectors, resulting in a smoothing operation, with the benefit of lowering the impact of outliers.

**STATISTICAL INFERENCE S20**

Afterwards, it is proposed to denote $z_i$ the i-th preprocessed feature vector corresponding to the i-th sample in N. A simple model is presented where, for each class k the distribution of the corresponding $z/y=k$ follows a multivariate Gaussian with mean $\mu_k$ and variance $\Sigma_k$. If this is regarded as an isotropic distribution, $\Sigma_k$ becomes $\sigma_k I$ where $\sigma_k \in R^+$ and I is the identity matrix. Under this hypothesis, it is possible to can have a probabilistically optimal classifier given good estimations of the means and variances. On the other hand, it is possible to obtain estimations by assigning examples to clusters. Algorithms that rely on Expectation Maximization (EM) allow to find local optima of data partitioning. The focus is placed on the soft *K*-means algorithm for two reasons; the first one being that soft K-means methods do not utilize, explicitly nor implicitly, any prior about the marginal label distributions, which makes it more robust to samples class imbalance. The second reason pertains to the unsupervised nature of the algorithm, as a locally optimal clustering with zero labels can be computed, albeit with suboptimal quality. Following this, an estimate of $p(z|y=k)$ is obtained..

**ACTIVE SELECTION S30**

After the step of statistical inference, the goal is to quantify the potential increase in performance that data points would yield if they were to be labeled. Classical solutions in the art rely on the heuristics that include:

**Margin:** The margin criterion, for any $z_i$, is the difference between the highest probability (i.e probability of the assigned cluster) and the second best one. The sample with the highest margin is considered the most confident.

**K-medoid**: The medoid is the cluster element that is closest to its centroid. The sample with the lowest distance to its cluster centroid is the one with the highest confidence.

Instead of using these classical approaches, in the present invention, it is proposed a new criterion based on the ratio of log densities that can be called **Log-probs Soft K-means Sampling (LSS).** Namely, it is considered that the sample that has the lowest log-probability ratio (*lpr*) of belonging to its cluster k rather than other clusters is the most confident one.

The logarithm of the density of $z/y=k$ is as follows:

$$\log p(\mathbf{z}_{/y=k}) = \log \left( \frac{1}{\sqrt{2\pi}\sigma_k} \right) - \frac{1}{2\sigma_k} \|\mathbf{z} - \mu_k\|^2$$

The log-probability ratio *lpr* is defined as the ratio of the log-densities over the different label-features distributions:

$$lpr_k(\mathbf{z}) = \frac{\log p(\mathbf{z}_{/y=k})}{\sum_{i=1}^{K} \log p(\mathbf{z}_{/y=i})}$$

For $a_k = \log\left(\frac{1}{\sqrt{2\pi}\sigma_k}\right)$ and $b_k = 1/2\sigma_k$ , the log-probability ratio of sample z for cluster k is as follows:

$$lpr_k(\mathbf{z}) = \frac{a_k - b_k\|\mathbf{z} - \mu_k\|^2}{\sum_{i=1}^{K}(a_i - b_i\|\mathbf{z} - \mu_i\|^2)}$$

The means and the standard deviation of the class-features distribution are estimated using the clustering as follows:

$$\hat{\mu}_k = \frac{\sum_{\mathbf{z}\in c_k}\mathbf{z}}{|c_k|} \text{ and } \hat{\sigma}_k = \sqrt{\frac{\sum_{\mathbf{z}\in C_k}(\mathbf{z} - \hat{\mu}_k)^2}{|C_k|}}.$$

Using the logs of the densities instead of the densities themselves makes the calculations more robust to the estimations. Under the assumption of a constant standard deviation for all the classes $\sigma = 1/\sqrt{2\pi}$ the ratio becomes:

$$lpr_k(\mathbf{z}) = \frac{\|\mathbf{z} - \mu_k\|^2}{\sum_{i=1}^{K}\|\mathbf{z} - \mu_i\|^2}.$$

A log-prob ratio close to 0 indicates a strong confidence that the sample belongs to the cluster, whereas a ratio close to 1 indicates a high uncertainty.

Once the criterion has been chosen, it is possible to compute the value for each sample and select which ones to label based on this value. In the present embodiment, a naive sequential pipeline is used for the active selection as an example. This pipeline is made of several rounds. The first round consists in selecting K samples to label that yield the highest confidence according to the chosen criterion (e.g *lpr* close to 0), that is one label per cluster. The remaining rounds label samples that are chosen as those that yield the lowest possible confidence (e.g *lpr* close to 1). The present invention proposes such a two-tier strategy so that the first labels are strongly representative of the class with lower risks of being outliers, and then the statistical inference is refined using these additional priors and choose labels that would be the most uncertain. As a matter of fact, samples with the strongest confidence are likely to be correctly predicted, hence there is no need to manually label them.

For the first round, where no labels are available, multiple random initializations are used for the soft K-means. Each initialization generates a different clustering $\pi1, \pi2, ....\pi_n$. The clustering that minimizes the sum of the distances of the samples to their closest centroids is then selected.

For the subsequent rounds, a soft K-means is executed with centroids initializations corresponding to the labels means for each class. In other words, the centroid of the $i^{th}$ cluster is initialized as the mean of all the labels from class i, or arbitrarily initialized as zero if there are no labels for class i. This allows for a higher quality clustering that can be used for another round to select the next K labels, or to classify the examples in the final round.

Therefore, through the few shot configuration in the present invention, one can leverage the feature extractors to obtain "nicer" data distributions where one could mix diversity sampling methods and uncertainty based sampling methods to obtain an effective labeling pipeline.

Afterwards, the labelled samples in the dataset can be assigned into different classes.

For example, when solving a multi-class classification problem in an image classification dataset using a method according to the present invention, the example selection process during the first round typically focuses on identifying high and low confidence images. High confidence examples are those where the object of interest is clearly visible and easily distinguishable. Conversely, low confidence examples tend to be images with unusual zoom levels on the object, atypical angles, or instances where the object is positioned more in the background. This distinction allows for better understanding and analysis of the classification challenge at hand.

In some exemplary experiments conducted, two distinct feature extractors were employed to evaluate the proposed Active Few-Shot Classification (AFSC) approach in comparison to the traditional Transductive Few-Shot Classification (TFSC) method. The first feature extractor, a ResNet-18, was used to compare the performance against state-of-the-art methods in the classical TFSC setting. The second feature extractor, an Ensembled Augmented Shots Y-shaped ResNet-12, was utilized for its ability to achieve top-tier performance on classical TFSC problems, making it suitable for the remainder of the experiments.

To assess the effectiveness of using AFSC, the performance of TFSC methods was compared to that of AFSC. The results indicated that the proposed active method outperformed random label selection, demonstrating the value of employing AFSC. Additionally, the soft K-means statistical inference method was used under the same conditions to further validate the findings.

In summary, the experiments revealed that the AFSC approach according to the present invention, when compared to the conventional TFSC methods, offered notable advantages in terms of accuracy, showcasing its potential for real-world applications.

Moreover, the present invention can be implemented in various domains such as computer vision, natural language processing, and robotics. As an example, it is provided an exemplary embodiment of detecting and flagging the defects in industrial products.

In this exemplary scenario industrial machines sometimes present defects in the products. Therefore, it needs to detect those defects and flag the products through streaming data about the products. Each machine can be used for a different product. A classically trained machine learning model would adapt poorly to different products. However, by using the active Few-Shot classification according to the present invention, very few new examples need to be annotated by human while the performance of the classification model on the new product is drastically improved.

In the context of the present invention, a process can commence using automatically collected samples of product images.. The first step is extracting the features from the collected images, those features are then used in an iterative process of clustering followed by a selection of images to annotate. The first round of this iterative process starts by clustering the images in as many clusters as there are classes of products (e.g : non defective! defective type 1/ defective type 2, etc...). The next step of the round consists of computing the confidence score for every image of belonging to its assigned cluster using the aforementioned criterion. For every cluster, the highest confidence score image is selected to be labelled or annotated . At the end of this first round, the images are clustered once again but this time using an initialization that relies on the labelled images. This initialization allows for a better, more refined clustering of the defects. And the subsequent rounds focus on selecting the low confidence score images for annotation as they allow for better disambiguation of the clustering. Each round yields a better clustering than the one before and the process stops when the clusters are satisfyingly representative of the classes of products.

Moreover, it is known to those skilled in the art, the aforementioned exemplary embodiments according to the present invention can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The present invention proposes a new Active Few-Shot Classification (AFSC) method. This be seen as a new paradigm rival to Transductive Few-Shot Classification (TFSC). It is proposed a simple methodology that relies on two main steps: a statistical inference method and an active sampling step in which one can select samples to label based on Log-probs Soft K-Means Sampling. Moreover, in the present invention, benchmarks from the field of TFSC is adapted and proved that the proposed framework can achieve new levels in accuracy compared to TFSC.

The embodiments described hereinabove are illustrations of this invention. Various modifications can be made to them without leaving the scope of the invention which stems from the annexed claims.

## Claims

1. A method for selecting samples in a dataset to be labelled in a classification task, wherein the dataset comprises N samples belonging to K classes, comprising the step of:

   S10: extracting features of the N samples using a feature extractor;
   S20: statistically inferring a probability distribution of the extracted features in the K classes, to obtain the density of each sample with respect to the K classes distributions; and
   S30: selecting samples to be labelled using the density.

2. The method according to claim 1, wherein it further comprises the following step:
   S11: preprocessing the extracted features of N samples.

3. The method according to claim 2, wherein the extracted features are preprocessed by means of a two-step normalization or a graph smoothing.

4. The method according to any one of claims 1 to 3, wherein the step of selecting samples to be labelled using the density is based on active selection.

5. The method according to claim 4, wherein the step of selecting samples to be labelled using the density comprises:

   S31: computing log-probability ratio (lpr) for each sample, wherein the logprobality ratio is a ratio of log-densities over the different label-features distributions;
   S32: selecting one sample in each class having the lowest log-probability ratio as the samples to be labelled in a classification task;
   S33: refining statistical inference using the selected samples having the lowest log-probability ratio and the samples having the highest log-probability ratio; and
   S34: repeating steps S31 to S33 until a sufficient number of samples to be labelled are selected.

6. The method according to claim 5, wherein the log-probability ratio (lpr) is defined by the following formula:

$$lpr_k(\mathbf{z}) = \frac{\log p(\mathbf{z}_{/y=k})}{\sum\limits_{i=1}^{K} \log p(\mathbf{z}_{/y=i})|}$$

$$\log p(\mathbf{z}_{/y=k}) = \log\left(\frac{1}{\sqrt{2\pi\sigma_k}}\right) - \frac{1}{2\sigma_k}\|\mathbf{z} - \mu_k\|^2$$

where $\qquad\qquad\qquad\qquad\qquad\qquad\qquad\qquad$ , zi is the i-th extracted feature vector corresponding to the i-th sample in N samples.

6. The method according to claim 1, wherein the step of statistically inferring a probability distribution of the extracted features in the K classes is based on soft K-means algorithm.

7. The method according to claim 1, wherein the dataset is an image dataset.

8. A method for classifying a dataset comprising N samples belonging to K classes, comprising the step of:

   S10: extracting features of the N samples using a feature extractor;

S20: statistically inferring a probability distribution of the extracted features in the K classes, to obtain the density of each sample with respect to the K classes distributions; and
S30: assigning classes to the samples using densities.

**9.** The method according to claim 1, wherein it further comprises the following step:
S11: preprocessing the extracted features of N samples.

**10.** The method according to claim 2, wherein the extracted features are preprocessed by means of a two-step normalization or a graph smoothing.

**11.** The method according to any one of claims 8 to 10, wherein the step of assigning classes to the samples using densities comprises:

- selecting samples to be labelled using the density;
- labelling the selected samples; and
- classifying the labelled samples.

**12.** The method according to any one of claim 11, wherein the step of selecting samples to be labelled using the density comprises:

S31: computing log-probability ratio (Ipr) for each sample, wherein the logprobality ratio is a ratio of log-densities over the different label-features distributions;
S32: selecting one sample in each class having the lowest log-probability ratio as the samples to be labelled in a classification task;
S33: refining statistical inference using the selected samples having the lowest log-probability ratio and the samples having the highest log-probability ratio; and
S34: repeating steps S31 to S33 until a sufficient number of samples to be labelled are selected.

**13.** The method according to any one of claim 12, wherein the log-probability ratio (Ipr) is defined by the following formula:

$$lpr_k(\mathbf{z}) = \frac{\log p(\mathbf{z}_{/y=k})}{\sum_{i=1}^{K} \log p(\mathbf{z}_{/y=i})|}$$

where $\log p(\mathbf{z}_{/y=k}) = \log\left(\frac{1}{\sqrt{2\pi}\sigma_k}\right) - \frac{1}{2\sigma_k}\|\mathbf{z} - \mu_k\|^2$ , zi is the i-th extracted feature vector corresponding to the i-th sample in N samples.

**14.** The method according to any one of claim 9, wherein the highest density determines the class of the sample.

**15.** A computer program product comprising instructions to be executed by a processor, the instructions being adapted to performance of a method as claimed in any one of claims 1 to 14 when executed by the processor.

Figure 1

Europäisches
Patentamt

European
Patent Office

Office européen
des brevets

# EUROPEAN SEARCH REPORT

**Application Number**

EP 23 30 5888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABDALI AYMANE ET AL: "Active Learning for Efficient Few-Shot Classification", ICASSP 2023 – 2023 IEEE INTERNATIONAL CONFERENCE ON ACOUSTICS, SPEECH AND SIGNAL PROCESSING (ICASSP), IEEE, 4 June 2023 (2023-06-04), pages 1-5, XP034449389, DOI: 10.1109/ICASSP49357.2023.10095220 [retrieved on 2023-05-05] * Section 4 * | 1-16 | INV. G06N20/00 |
| X | AYMANE ABDALI ET AL: "Active Few-Shot Classification: a New Paradigm for Data-Scarce Learning Settings", ARXIV.ORG, CORNELL UNIVERSITY LIBRARY, 201 OLIN LIBRARY CORNELL UNIVERSITY ITHACA, NY 14853, 23 September 2022 (2022-09-23), XP091326618, * Section 3 * | 1-16 | |
| A | PEYMAN BATENI ET AL: "Beyond Simple Meta-Learning: Multi-Purpose Models for Multi-Domain, Active and Continual Few-Shot Learning", ARXIV.ORG, CORNELL UNIVERSITY LIBRARY, 201 OLIN LIBRARY CORNELL UNIVERSITY ITHACA, NY 14853, 13 January 2022 (2022-01-13), XP091137977, * Section 4 * | 1-16 | **TECHNICAL FIELDS SEARCHED (IPC)** <br><br> G06N |

The present search report has been drawn up for all claims

| Place of search | Date of completion of the search | Examiner |
|---|---|---|
| The Hague | 22 November 2023 | Targon, Valerio |

EPO FORM 1503 03.82 (P04C01)

2

**REFERENCES CITED IN THE DESCRIPTION**

**Non-patent literature cited in the description**

- **FELIX WU ; AMAURI SOUZA ; TIANYI ZHANG ; CHRISTOPHER FIFTY ; TAO YU ; KILIAN WEINBERGER.** *In International conference on machine learning,* 2019, 6861-6871